# EUROPÄISCHE PATENTSCHRIFT

(11) **EP 0 757 237 B1**
(45) Veröffentlichungstag und Bekanntmachung des Hinweises auf die Patenterteilung: **10.04.2002**
(21) Anmeldenummer: 96102705.9
(22) Anmeldetag: 23.02.1996
(51) Int. Cl.: G01L 19/14, G01L 9/12

(54) **Druckaufnehmer**
Pressure transducer
Capteur de pression

(30) Priorität: 01.08.1995 EP 95112075
(43) Veröffentlichungstag der Anmeldung: 05.02.1997
(73) Patentinhaber: Endress + Hauser GmbH + Co., 79689 Maulburg (DE)
(72) Erfinder: Schleiferböck, Detlef, 79688 Hausen (DE)
(74) Vertreter: Morstadt, Volker, Dipl.-Ing.

(56) Entgegenhaltungen:
- EP-A- 0 403 257
- WO-A-94/29686
- US-A- 4 920 972

## Beschreibung

Die Priorität der unveröffentlichten europäischen Anmeldung Nr. 95 112075.7 vom 1.08.1995 wird beansprucht.

Die Erfindung betrifft Druckaufnehmer.

Druckaufnehmer müssen bei einer Vielzahl von Anwendungen unterschiedlichen Anforderungen genügen. So sind z.B. in der Lebensmittelindustrie aus Hygienegründen oft frontbündige Druckaufnehmer, z.B. aus nicht-rostendem Stahl, gefordert. Die chemische Industrie stellt andererseits häufig besondere Anforderungen an die chemische Beständigkeit der mediums-berührten Bauteile von Druckaufnehmern. Bei Anwendungen mit abrasiven Medien, bestehen besondere Anforderungen an die mechanische Beständigkeit der mediums-berührten Bauteile. Des weiteren sind Druckaufnehmer bei einer Vielzahl von Anwendungen besonders hohen bzw. niedrigen Umgebungstemperaturen ausgesetzt.

Um diesen Anforderungen zu genügen, werden beispielsweise, wie in dem 1990 in München erschienen Buch von H. Julien, "Druckmittler", auf den Seiten 7 und 8, beschrieben ist, Druckaufnehmer in Verbindung mit Druckmittlern eingesetzt.

In diesem Buch sind Druckaufnehmer beschrieben mit
- einem Sensorelement,
- einem Gehäuse,
- Befestigungsmitteln zur Fixierung des Sensorelements in dem Gehäuse,
- einem Druckmittler mit
   -- einer den Druckmittler abschließenden Membran, der ein zu messender Druck zuzuführen ist,
   -- einem an der Membran angeordneten abgeschlossenen Hohlraum,
   -- einer von dem Hohlraum zu dem Sensorelement führenden dünnen Leitung, und
   -- einer den Hohlraum und die Leitung vollständig ausfüllenden Flüssigkeit, die den Druck von der Membran auf das Sensorelement überträgt.

Die Flüssigkeit ist z.B. ein geeignetes, möglichst inkompressibles Öl, das in den Druckmittler blasenfrei einzubringen ist.

Ein Nachteil eines solchen Druckaufnehmers mit einem Druckmittler ist, daß seine Herstellung, insbesondere die Einfüllung der Flüssigkeit, sehr aufwendig ist.

Ein weiterer Nachteil besteht darin, daß in dem Hohlraum ein die Membran stützendes Membranbett erforderlich ist, um eine Zerstörung der Membran durch einen darauf einwirkenden, den Meßbereich über- oder unterschreitenden Druck zu verhindern.

Ein weiterer Nachteil besteht darin, daß ein Defekt in der Membran, z.B. ein Loch oder ein Riß, dazu führt, daß die Flüssigkeit ausläuft. Dies ist besonders kritisch bei Anwendungen in der Lebensmittelindustrie und in der Lackindustrie.

Ein weiterer Nachteil besteht darin, daß, bedingt durch die thermische Ausdehnung der Flüssigkeit, Meßfehler entstehen. Diese sind bei kleinen Meßbereichen, z.B. 0 Pa bis 50 kPa, besonders groß. Abhilfe wird hier üblicherweise geschaffen, indem ein Druckmittler mit einer Membran von großem Durchmesser verwendet wird.

In der US-A 4,686,764 oder der US-A-4 920 972 ist ein Druckaufnehmer beschrieben mit
- einem Sensorelement,
- einem Gehäuse,
- Befestigungsmitteln zur Fixierung des Sensorelements im Gehäuse,
- einer das Gehäuse abschließenden Membran, der ein zu messender Druck zuzuführen ist, und
- einem gel-artigen Füllmaterial,
   -- das den durch die Membran, das Gehäuse und das Sensorelement gebildeten Hohlraum ausfüllt und
   -- das den Druck von der Membran auf das Sensorelement überträgt.

Membran und Füllmaterial haben hier lediglich die Aufgabe, das Sensorelement zu schützen.

Ein Nachteil eines solchen Druckaufnehmers ist, daß die aktive Fläche des Sensorelements klein ist im Vergleich zu der Fläche der Membran, auf die der zu messende Druck einwirkt. Dadurch ist das mit einem gel-artigen Material gefüllte Volumen innerhalb des Druckaufnehmers groß. Dies bewirkt eine nahezu isotrope Druckverteilung in dem Füllmaterial. Der temperaturbedingte Meßfehler eines solchen Druckaufnehmers ist genau wie bei dem eingangs beschriebenen Druckaufnehmer mit Druckmittler besonders bei kleinen Meßbereichen sehr groß.

Ein weiterer Nachteil besteht darin, daß die Membran gegenüber, insb. punktförmigen, mechanischen Belastungen nicht geschützt ist. Das Füllmaterial, auf dem sie aufliegt, kann lediglich großflächigere Belastungen abfangen.

Es ist eine Aufgabe der Erfindung, einen Druckaufnehmer anzugeben, der nur einen geringen temperatur-bedingten Meßfehler aufweist, der insbesondere bei kleinen Meßbereichen, z.B. 0 Pa bis 50 kPa, einsetzbar ist und der insbesondere einen geringen Membran-Durchmesser aufweist.

Hierzu besteht die Erfindung in einem Druckaufnehmer mit
- einem Sensorelement
   -- mit einer an ihrem Rand gehalterten Sensormembran,
      --- deren nicht-gehalterter Teil aufgrund eines zu messenden Druckes auslenkbar ist,
- einem Gehäuse,
- Befestigungsmitteln zur Fixierung des Randes der Sensormembran in dem Gehäuse,
- einer das Gehäuse abschließenden Membran, der ein zu messender Druck zuzuführen ist, und
   -- einem Festkörper,
   -- der eine Dicke x aufweist,
   -- der zwischen der Membran und dem auslenkbaren Teil der Sensormembran angeordnet ist und
   -- der den Druck von der Membran auf die Sensormembran überträgt,
wobei die Dicke x und das Elastizitätsmodul des Festkörpers und die Steifigkeit der Membran so aufeinander abgestimmt sind, daß der temperaturbedingte Meßfehler minimiert wird.

Gemäß einer Ausgestaltung der Erfindung weisen die Fläche des auslenkbaren Teils der Sensormembran und die Fläche der Membran, der der Druck zuzuführen ist, nahezu die gleiche Größe auf.

Gemäß einer weiteren Ausgestaltung liegt in dem Festkörper bei einem an der Membran anliegenden Druck eine nichtisotrope Spannungsverteilung vor.

Gemäß einer weiteren Ausgestaltung weist das Sensorelement eine Sensormembran aus Keramik und einen Grundkörper aus Keramik auf, wobei die Sensormembran durch den Grundkörper gehaltert ist.

Gemäß einer Ausgestaltung der Erfindung weist das Gehäuse eine zentrale axiale Bohrung auf, und eine sich radial in das Innere des Gehäuses erstreckende Schulter ist an einem der Membran zugewandten Ende des Gehäuses angeformt, mit welcher Schulter die Membran druckdicht verbunden ist.

Gemäß einer Weiterbildung dieser Ausgestaltung ist ein durch die Membran, die Schulter und das Sensorelement gebildeter Hohlraum vollständig von dem Festkörper ausgefüllt.

Gemäß der Erfindung weist der Festkörper einen Elastizitätsmodul auf, der auf die Steifigkeit der Membran abgestimmt ist, und ist bevorzugt ein Elastomer, insb. ein additionsvernetzendes Silikon.

Gemäß einer anderen Ausgestaltung der Erfindung ist die Membran in einem Abstand von dem Sensorelement angeordnet, der so bemessen ist, daß der temperaturbedingte Meßfehler des Druckaufnehmers minimal ist.

Gemäß einer weiteren Ausgestaltung der Erfindung ist die Membran druckdicht und gasdicht mit dem Gehäuse verbunden, insbesondere verschweißt.

Die Erfindung wird nun anhand der Figuren der Zeichnung, in denen ein Ausführungsbeispiel dargestellt ist, näher erläutert.
- Fig. 1 zeigt: einen Längsschnitt durch einen Druckaufnehmer,
- Fig. 2 zeigt: den Temperaturkoeffizienten TK₁ des Nullsignals als Funktion des Abstandes X zwischen der Membran und dem Sensorelement für drei verschiedene Druckaufnehmer, und
- Fig. 3 zeigt: den Temperaturkoeffizienten TK₂ der Ausgangsspanne als Funktion des Abstandes X zwischen der Membran und dem Sensorelement für die drei Druckaufnehmer.

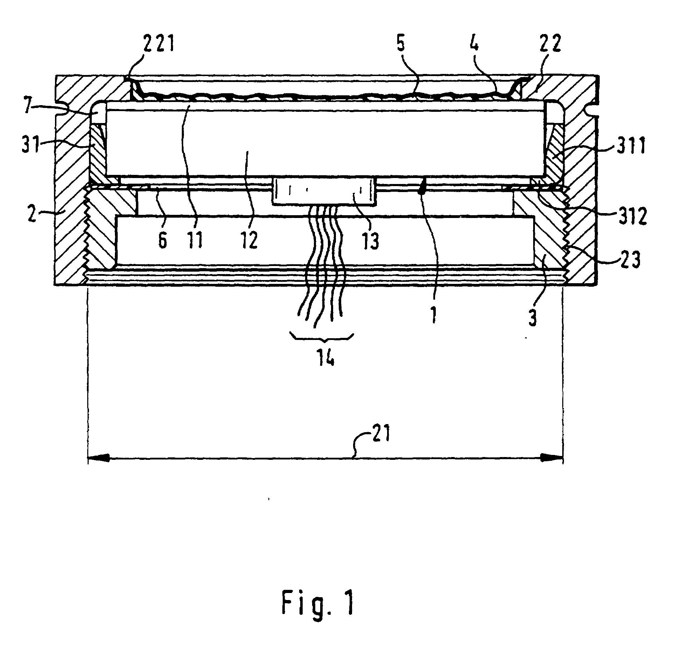

Das in Fig. 1 dargestellte Ausführungsbeispiel eines Druckaufnehmers besteht aus vier Grundelementen: aus einem Sensorelement 1, aus einem Gehäuse 2, aus Befestigungsmitteln 3 zur Fixierung des Sensorelements 1 und aus einer das Gehäuse 1 abschließenden Membran 4.

Das Gehäuse 2 ist rotationssymmetrisch und weist eine zentrale axiale Bohrung 21 auf. An ein Ende des Gehäuses 2 ist eine Schulter 22 angeformt, die sich radial in das Gehäuse-Innere erstreckt. Das Gehäuse 2 besteht z.B. aus einem nicht-rostenden Stahl.

Die Schulter 22 weist an der äußeren Seite von deren innerem Rand einen Absatz 221 auf. Mit diesem ist die Membran 4 druckdicht und vorzugsweise gasdicht verbunden, z.B. verschweißt, und sie verschließt somit das eine Ende der Bohrung 21. Die gehäuse-abgewandte Fläche der Membran 4 bildet diejenige Fläche, auf die der zu messende Druck einwirkt. Der Membranwerkstoff ist je nach Anwendung z.B. ein nicht-rostender Stahl, Hastelloy, Monell oder Titan. Es ist ebenfalls üblich, z.B. mit Halar oder Polytetrafluorethylen beschichtete Membranen zu verwenden.

Das Sensorelement 1 ist beispielsweise eine übliche kapazitive, zylindrische Druckmeßzelle, z.B. aus Keramik, insb. Al₂O₃, bevorzugt von 96% Reinheit, die aus einer Sensormembran 11 und einem Grundkörper 12 besteht, die an ihrem jeweiligen Rand durch ein Verbindungsmaterial, z.B. ein Aktivhartlot, in einem definierten Abstand voneinander gehalten und miteinander hermetisch dicht verbunden sind. Die Sensormembran 11 ist innerhalb der randseitigen Fügestelle druckabhängig auslenkbar. Die mit Elektrodenmaterial beschichteten Innenflächen der Sensormembran 11 und des Grundkörpers 12 bilden mindestens einen Meßkondensator, dessen Kapazität von der Durchbiegung der Sensormembran 11 abhängt und somit ein Maß für den auf die Sensormembran 11 einwirkenden Druck ist.

Aber auch andere Arten von Sensorelementen, z.B. Drucksensoren, die mit Dehnungsmeßstreifen oder mit piezoresistiven Elementen arbeiten, sind bei der Erfindung einsetzbar. Diese Drucksensoren weisen eine elektrische Größe auf, die von dem einwirkenden Druck abhängt.

Auf der meßmedium-abgewandten Seite kann das Sensorelement 1 eine elektronische Schaltung 13 aufweisen, die die elektrische Größe, bei dem obigen kapazitiven Sensorelement 1 also die Kapazitätsänderungen, in ein druckabhängiges elektrisches Signal umwandelt und dieses über elektrische Anschlußleitungen 14 einer weiteren Verarbeitung und/oder Anzeige zugänglich macht.

Das Sensorelement 1 ist in dem Gehäuse 1 so angeordnet, daß die druckempfindliche Sensormembran 11 mit einem äußeren Rand auf einer inneren Fläche der Schulter 22 aufliegt.

Die Schulter 22 erstreckt sich soweit in das Gehäuse-Innere, daß sie vorzugsweise lediglich den Bereich der Fügestelle zwischen der Sensormembran 11 und dem Grundkörper 12 überdeckt. Die druckabhängig auslenkbare Fläche der Sensormembran 11 ist somit praktisch gleich der Fläche der Membran 4, auf die der zu messende Druck einwirkt.

Auf der sensormembran-abgewandten Seite des Grundkörpers 12 ist ein das Sensorelement 1 in der Bohrung 21 zentrierender Winkelring 31 angeordnet, der aus einem Rohr 311, das den Grundkörper 12 teilweise umgreift, und einer sich radial in das Winkelring-Innere erstreckenden Schulter 312 besteht, die auf einem äußeren Rand der sensormembran-abgewandten Kreisfläche des Grundkörpers 12 aufliegt. Der Winkelring 31 besteht z.B. aus einem Gummi.
Befestigt ist das Sensorelement 1 in dem Gehäuse 2 durch einen Gewindering 3, der in ein in dem Gehäuse 1 angeordnetes Innengewinde 23 gegen die Schulter 312 des Winkelrings 31 geschraubt ist.

Je nach Wahl der Materialien von Winkelring 31 und Gewindering 3 empfiehlt es sich, wie in Fig. 1 dargestellt, eine Gleitfolie 6, z.B. eine ringscheibenförmige PolyimidFolie, zwischen den beiden Bauteilen einzufügen.

Die Art der Befestigung ist für die Erfindung nicht wesentlich und kann durch eine beliebige andere dem Fachmann bekannte Befestigungsart ersetzt werden.

Zwischen der Membran 4 und dem Sensorelement 1 besteht ein Spalt, der vollständig von einem Festkörper 5, der einen zur Minimierung des temperatur-bedingten Meßfehlers geeigneten Elastizitätsmodul aufweist, ausgefüllt ist. Durch den Festkörper 5 wird ein auf die Membran 4 einwirkender Druck auf das Sensorelement 1 übertragen.

Es wird ein Festkörper 5 verwendet, dessen Elastizitätsmodul auf die Steifigkeit der Membran 4 abgestimmt ist. Weist der Festkörper 5 einen zu großen Elastizitätsmodul auf, so erfolgt bei einem gegebenen einwirkenden Druck nur eine geringe Auslenkung der Membran 4 und der Sensormembran 11. Dadurch würde der Meßbereich des Druckaufnehmers erheblich eingeschränkt. Weist der Festkörper 5 einen zu geringen Elastizitätsmodul auf, so verhält sich der Festkörper 5 wie ein flüssigkeitsgefüllter Druckmittler mit den damit verbundenen Nachteilen, insbesondere im Hinblick auf temperaturabhängige Meßfehler.

Ein geeigneter Festkörper 5 ist z.B. eine additionsvernetzende Vergußmasse, z.B. aus einem Silikonelastomer. Eine solche Vergußmasse bietet den Vorteil, daß bei deren Aushärten nach dem Einfüllen keine Spaltprodukte freigesetzt werden.

Bei der Herstellung des Druckaufnehmers ist zuerst die Membran 4 druckdicht und vorzugsweise gasdicht mit dem Gehäuse 2 zu verbinden, z.B. indem deren äußerer Rand mit der Schulter 221 verschweißt wird. Gehäuse 2 und Membran 4 bilden einen Topf, in den der Festkörper 5 einzubringen ist. Dies erfolgt z.B., indem eine additionsvernetzende Vergußmasse in den Topf eingefüllt wird. Das Sensorelement 1 ist anschließend direkt in die noch flüssige Vergußmasse einzusetzen und mittels des Winkelrings 31, der Gleitfolie 6 und des Gewinderings 3 im Gehäuse 2 zu fixieren. Überschüssige Vergußmasse wird dabei in einen zwischen dem Sensorelement 1 und dem Gehäuse 2 besteheneden Spalt 7 gepreßt. Zwischen der Sensormembran 11 und der Schulter 22 des Gehäuses 2 bleibt eine sehr dünne Vergußschicht mit einer Dicke von einigen Mikrometern bestehen. Die Vergußmasse erstarrt anschließend.

In Abhängigkeit von der Materialwahl für den Festkörper 5 und die Membran 4 ist diese gegebenenfalls mit einem geeigneten Haftvermittler vorzubehandeln, damit zwischen der Membran 4 und dem Festkörper 5 eine gute mechanische Kopplung besteht. Eine solche gute mechanische Kopplung ist Voraussetzung für die besonderen Eigenschaften des Druckaufnehmers der Erfindung bzgl. der temperaturabhängigen Meßfehler, die im folgenden detailliert erläutert werden.

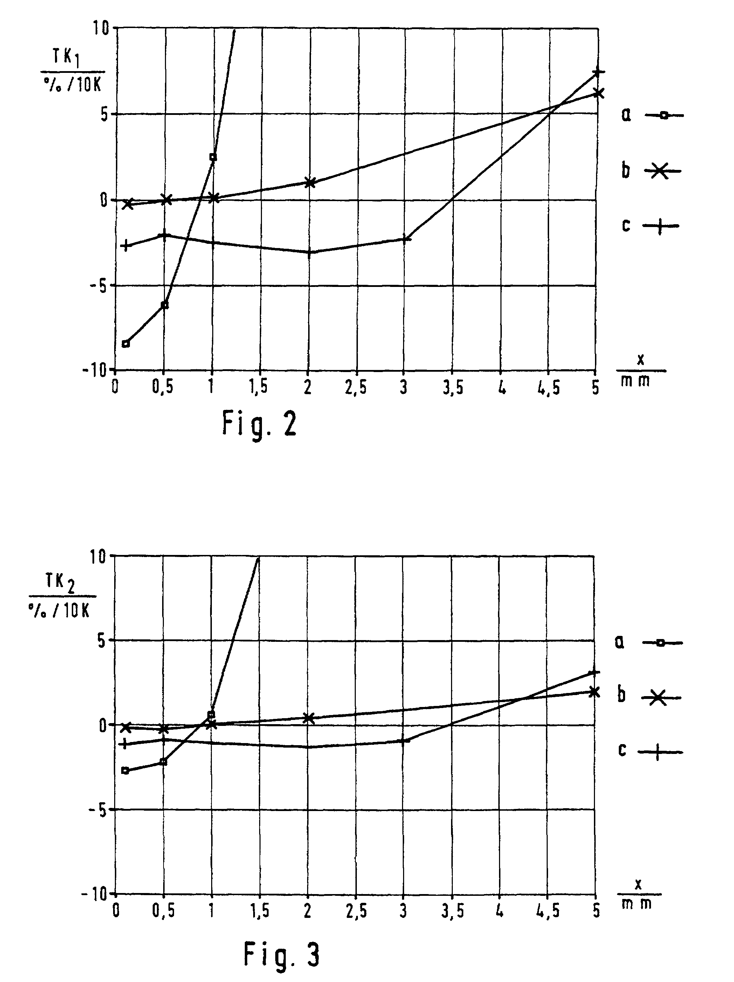

Hierzu sind in Fig. 2 Ergebnisse von Finite-Elemente-Berechnungen dargestellt, die einen mittleren Temperaturkoeffizienten TK₁ des Nullsignals als Funktion des Abstandes X zwischen der Membran 4 und dem Sensorelement 1 angeben.

Mit dem 'mittleren Temperaturkoeffizienten des Nullsignals' ist hier in Anlehnung an die deutschen Norm DIN 16 086 "Elektrische Druckmeßgeräte" die größte auf 10 K bezogene Änderung des Nullsignals im Nenntemperaturbereich bezeichnet, wobei das Nullsignal das Ausgangssignal des Druckmeßaufnehmers am Meßbereichsanfang und der Nenntemperaturbereich derjenige Temperaturbereich sind, in dem der Druckaufnehmer die Werte seiner Spezifikation einhält.

Weiterhin sind in Fig. 3 Ergebnisse aus Finite-Elemente-Berechnungen dargestellt, die den mittleren Temperaturkoeffizienten TK₂ der Ausgangsspanne als Funktion des Abstandes X zwischen der Membran 4 und dem Sensorelement 1 angeben.

Mit dem 'mittleren Temperaturkoeffizient der Ausgangsspanne' ist hier ebenfalls in Anlehnung an die genannten Norm DIN 16 086 die größte auf 10 K bezogene Änderung der Ausgangsspanne im Nenntemperaturbereich bezeichnet, wobei die Ausgangsspanne die Differenz zwischen End- und Anfangswert des Ausgangssignals und der Nenntemperaturbereich wie oben definiert sind.

Die Ergebnisse der Berechnungen sind innerhalb gewisser Fehlergrenzen an sich auch dadurch zu erhalten, daß die entsprechenden Druckaufnehmer gebaut und die entsprechenden Werte gemessen werden. Da Finite-Elemente-Berechnungen jedoch im Vergleich hierzu sehr viel schneller und billiger zu erhalten sind, wurden nur einige wenige, hier nicht aufgeführte Ergebnisse durch gebaute Druckaufnehmer verifiziert.

Beide Temperaturkoeffizienten TK₁, TK₂ sind in Prozent angegeben, wobei der jeweils bei einer Temperatur von 20 °C ermittelte Wert des Nullsignals bzw. der Ausgangsspanne als Bezugswert, also als 100%, gesetzt wurde.

Da das Material der Membran 4 im allgemeinen durch die Anwendung bestimmt wird, ist lediglich die Dicke der Membran 4 variabel. Über die Dicke wird die Steifigkeit der Membran 4 eingestellt.

Den Finite-Elemente-Berechnungen liegen folgende Daten zugrunde:
- Der Durchmesser der Membran 4 beträgt jeweils 30 mm,
- die Membran 4 besteht jeweils aus nicht-rostendem Stahl,
- der Nenntemperaturbereich beträgt jeweils - 40 °C bis + 120°C, und
- der Meßbereich des jeweiligen Druckaufnehmers beträgt 0 Pa bis 10 kPa (0 bar bis 0,1 bar).

Die angegebenen Größen beziehen sich lediglich auf die hier angeführten Beispiele. Es ist durchaus möglich, derartige Druckaufnehmer mit geeigneten Festkörpern, insb. Silikonelastomeren, bei Temperaturen bis zu 200 °C und mehr einzusetzen. Außerdem ist der Gegenstand der Erfindung bei anderen Meßbereichen als dem oben angegebenen Meßbereich von 0 Pa bis 10 kPa anwendbar.

Bei größeren Meßbereichen sind die temperaturbedingten Meßfehler jedoch geringer. Bei kleineren Meßbereichen steigt der Aufwand, der nötig ist, um die Temperaturkoeffizienten experimentell zu bestimmen, erheblich. Bei dem oben angegebenen Meßbereich von 0 Pa bis 10 kPa entspricht ein Meßfehler von beispielsweise 0,1 % einer Druckdifferenz von 10 Pa. Ein an die Membran 4 anzulegender Prüfdruck muß mit einer ausreichenden Genauigkeit, hier z.B. auf 1 Pa genau, bereitgestellt werden, damit der Meßfehler gemessen werden kann.

Für die mit a bezeichneten Kurven von Fig. 2 und Fig.3
- ist die Membran 4 0,2 mm dick und
- der Festkörper 5 weist einen Elastizitätsmodul von 2 N/mm² auf.

Für die mit b bezeichneten Kurven von Fig. 2 und Fig. 3
- ist die Membran 4 0,05 mm dick und
- der Festkörper 5 weist einen Elastizitätsmodul von 0,05 N/mm² auf.

Für die mit c bezeichneten Kurven von Fig. 2 und Fig.3
- ist die Membran 4 0,05 mm dick und
- der Festkörper 5 weist einen Elastizitätsmodul von 2 N/mm² auf.

Den Kurven a von Fig. 2 und Fig. 3 liegen somit eine Membran 4 mit hoher Steifigkeit und ein Festkörper mit einem großen Elastizitätsmodul zugrunde. Der Temperaturkoeffizient TK₁ des Nullsignals und der Temperaturkoeffizient TK₂ der Ausgangsspanne weisen einen steilen Anstieg auf, und bei kleinen Abständen X sind beide Temperaturkoeffizienten negativ.

Den Kurven b von Fig. 2 und Fig. 3 liegen eine Membran 4 mit geringer Steifigkeit und ein Festkörper mit einem kleinen Elastizitätsmodul zugrunde. Sie weisen einen flachen Anstieg im Vergleich zu den Kurven a auf. Beide Temperaturkoeffizienten nehmen bei kleinen Abständen X negative Werte an. Der Nulldurchgang der beiden Kurven b ist im Vergleich zu den Kurven a zu kleineren Abständen X hin verschoben.

Soll der Nulldurchgang der beiden Temperaturkoeffizienten als Funktion des Abstandes X zu größeren Abständen hin verschoben werden, müssen eine Membran 4 mit geringerer Steifigkeit und ein Festkörper 5 mit einem größeren Elastizitätsmodul verwendet werden. Dies ist in den Kurven c von Fig. 2 und Fig. 3 dargestellt.
Sie verlaufen ebenfalls sehr flach, sind jedoch gegenüber den Kurven b zu kleineren Werten für den Temperaturkoeffizienten TK₁ des Nullsignals und den Temperaturkoeffizienten TK₂ der Ausgangsspanne hin verschoben.

Eine charakteristische, durch die Verwendung eines Festkörpers 5 erzeugte Eigenschaft ist, daß negative Temperaturkoeffizienten TK₁, TK₂ auftreten.

Dies ist bei flüssigkeitsgefüllten Druckmittlern nicht der Fall. Flüssigkeiten, die üblicherweise in Druckmittlern verwendet werden, haben in dem obigen Temperaturbereich nämlich einen positiven thermischen Ausdehnungskoeffizienten. Die Ausdehnung der Flüssigkeit erzeugt einen zusätzlichen Druck im Inneren des Druckmittlers. Es treten dadurch Kräfte auf, die in alle Richtungen gleichermaßen wirken.

Hiervon unterscheidet sich der mit einem Festkörper gefüllte Druckmittler wesentlich. Die mechanische Kopplung zwischen Festkörper 5 und Membran 4 bewirkt bei der oben erläuterten Einbauweise des Sensorlements 1 in das Gehäuse 2 richtungsabhängige Spannungen im Inneren des Druckmittlers, die dem Effekt der ebenfalls vorhandenen thermischen Ausdehnung des Festkörpers auf die Temperaturkoeffizienten des Nullsignals und der Ausgangsspanne entgegenwirken. Bei kleinen Abständen X überwiegt der Effekt der richtungsabhängigen Spannungen; die Temperaturkoeffizienten nehmen daher negative Werte an Bei großen Abständen X überwiegt der Effekt der thermischen Ausdehnung; die Temperaturkoeffizienten nehmen daher positive Werte an.

Durch geeignete Wahl der Dicke der Membran 4 und des Elastizitätsmoduls des Festkörpers 5 kann sichergestellt werden, daß der Temperaturkoeffizient TK₁ des Nullsignals und der Temperaturkoeffizient TK₂ der Ausgangsspanne als Funktion des Abstandes X einen Nulldurchgang aufweisen.

Wie aus den Fig. 2 und 3 ersichtlich ist, sind der Wert des Abstandes X, bei dem der Temperaturkoeffizient TK₁ des Nullsignals gleich null ist, und der Wert des Abstandes X, bei dem der Temperaturkoeffizient TK₂ der Ausgangsspanne gleich null ist, nahezu gleich und die entsprechenden beiden Kurven zeigen einen ähnlichen Verlauf.

Bei der Herstellung eines erfindungsgemäßen Druckaufnehmers ist somit der Abstand X zwischen der Membran 4 und dem Sensorelement 1 so zu bemessen, daß der temperaturbedingte Meßfehler des Druckaufnehmers minimal ist, d.h. daß der Temperaturkoeffizient TK₁ des Nullsignals und der Temperaturkoeffizient TK₂ der Ausgangsspanne praktisch gleich null sind.

Diese Bemessung ergibt erhebliche Einsparungen bei der Herstellung, weil die normalerweise sehr aufwendige Kalibration drastisch vereinfacht wird, da der Druckaufnehmer praktisch keine Meßfehler auf Grund der Temperatur aufweist. Es genügt somit, lediglich bei einer einzigen Temperatur die Kennlinie des Druckaufnehmers zu bestimmen.

Weiterhin können die Fertigungstoleranzen für die Bauteile des Druckaufnehmers relativ groß sein, wenn eine Materialund Geometrieauswahl getroffen wird, bei der die beiden obigen Temperaturkoeffizienten als Funktion des Abstandes X einen flachen Verlauf aufweisen, wie dies in den Beispielen b und c der Fig. 2 und 3 dargestellt ist.

Während die temperaturbedingten Meßfehler von herkömmlichen flüssigkeits-gefüllten Druckmittlern bei kleinen Meßbereichen, z.B. insb. bei einem Meßbereich von 0 Pa bis 50 Pa, den Einsatz von Druckmittlern mit einem großen Membrandurchmesser erfordern, kann bei den erfindungsgemäßen Druckaufnehmern eine Membran 4 mit sehr viel geringerem Durchmesser verwendet werden. Zum Vergleich seien typische Werte für einen herkömmlichen Druckaufnehmer mit einem flüssigkeits-gefüllten Druckmittler genannt. Der Meßfehler liegt bei einem solchen Druckaufnehmer mit einem Membrandurchmesser von 30 mm ohne zusätzliche Meßfehlerkorrekturen in der Größenordnung von 1 kPa pro 10 K. Bei einem Meßbereich von 0 Pa bis 10 kPa entspricht das einem Meßfehler von 10 % pro 10 K. Ein solcher Druckaufnehmer ist also unbrauchbar.

Die geringe Größe des erfindungsgemäßen Druckaufnehmers erlaubt es, Druckaufnehmer für kleine Meßbereiche auch dort einzusetzen, wo der Platz begrenzt ist.

Der Druckaufnehmer ist sehr leicht zu reinigen, da die Membran 4 frontbündig eingebaut ist. Dies ist insbesondere in der Lebensmittelindustrie von Vorteil.

Da die Meßgenauigkeit des Druckaufnehmers durch die vorgeschaltete Membran 4 und den Festkörper 5 nicht beeinträchtigt wird, ist es nun möglich, solche Druckaufnehmer überall dort einzusetzen, wo dies bisher aufgrund der mit flüssigkeits-gefüllten Druckmittlern verbundenen größeren Meßfehler nicht möglich war.

## Patentansprüche

1. Druckaufnehmer mit
- einem Sensorelement (1),
-- mit einer an ihrem Rand gehalterten Sensormembran (11),
--- deren nicht-gehalterter Teil aufgrund eines zu messenden Druckes auslenkbar ist,
- einem Gehäuse (2),
- Befestigungsmitteln (3) zur Fixierung des Randes der Sensormembran (11) in dem Gehäuse (2),
- einer das Gehäuse (2) abschließenden Membran (4), der ein zu messender Druck zuzuführen ist,
und
-- einem Festkörper (5),
-- der eine Dicke (x) aufweist,
-- der zwischen der Membran (4) und dem auslenkbaren Teil der Sensormembran (11) angeordnet ist und
-- der den Druck von der Membran (4) auf die Sensormembran (11) überträgt,
wobei die Dicke (x) und das Elastizitätsmodul des Festkörpers (5) und die Steifigkeit der Membran (4) so aufeinander abgestimmt sind, daß der temperaturbedingte Meßfehler minimiert wird.

2. Druckaufnehmer nach Anspruch 1, bei dem die Fläche des auslenkbaren Teils der Sensormembran (11) und die Fläche der Membran (4), der der Druck zuzuführen ist, nahezu die gleiche Größe aufweisen.

3. Druckaufnehmer nach Anspruch 1, bei dem in dem Festkörper (5) bei einem an der Membran (4) anliegenden Druck eine nicht-isotrope Spannungsverteilung vorliegt.

4. Druckaufnehmer nach Anspruch 1, bei dem das Sensorelement (1) eine Sensormembran (11) aus Keramik und einen Grundkörper (12) aus Keramik aufweist, wobei der Rand der Sensormembran (11) durch den Grundkörper (12) gehaltert ist.

5. Druckaufnehmer nach Anspruch 1, bei dem
- das Gehäuse (2) eine zentrale axiale Bohrung (21) aufweist und
- eine sich radial in das Innere des Gehäuses (2) erstreckende Schulter (22) an einem der Membran (4) zugewandten Ende des Gehäuses (2) angeformt ist, mit welcher Schulter (22) die Membran (4) druckdicht verbunden ist.

6. Druckaufnehmer nach Anspruch 5, bei dem ein durch die Membran (4), die Schulter (22) und das Sensorelement (1) gebildeter Hohlraum vollständig von dem Festkörper (5) ausgefüllt ist.

7. Druckaufnehmer nach Anspruch 1, bei dem der Festkörper (5) einen Elastizitätsmodul aufweist, der auf die Steifigkeit der Membran (4) abgestimmt ist.

8. Druckaufnehmer nach Anspruch 5, bei dem der Festkörper (5) ein Elastomer, insbesondere ein additionsvernetzendes Silikon, ist.

9. Druckaufnehmer nach Anspruch 4, bei dem die Membran (4) in einem Abstand (X) von dem Sensorelement (1) angeordnet ist, der so bemessen ist, daß der temperaturbedingte Meßfehler des Druckaufnehmers minimal ist.

10. Druckaufnehmer nach Anspruch 1, bei dem die Membran (4) druckdicht und gasdicht mit dem Gehäuse (2) verbunden, insbesondere verschweißt, ist.

## Claims

1. A pressure transducer with
- a sensor member (1).
-- with an edge-mounted sensor membrane (11),
--- the non-mounted part of which is deflectable due to a pressure to be measured,
- a housing (2),
- fixing means (3) for attaching the edge of the sensor membrane (11) within the housing (2).
- a membrane (4) closing off the housing (2), to which membrane a pressure for measuring is to be conducted,
and
-- a solid substance (5).
-- which has a thickness (x).
-- which is arranged between the membrane (4) and the deflectable part of the sensor membrane (11) and
-- which transfers the pressure from the membrane (4) to the sensor membrane (11),
the thickness (x) and elastic modulus of the solid substance (5) and the stiffness of the membrane being mutually co-ordinated in such a way that the temperature-determined measuring error is minimised.

2. A pressure transducer according to Claim 1, in which the area of the deflectable part of the sensor membrane (11) and the area of the membrane (4) to which the pressure is to be conducted are of almost the same size.

3. A pressure transducer according to Claim 1, in the solid substance (5) of which, in association with a pressure at the membrane (4), a non-isotropic voltage distribution is present.

4. A pressure transducer according to Claim 1, in which the sensor member has a sensor membrane (11) made of ceramic and a main body (12) made of ceramic, the edge of the sensor membrane (11) being mounted by means of the main body (12).

5. A pressure transducer according to Claim 1, in which
- the housing (2) has a central axial bore hole (21) and
- a shoulder (22) extending radially into the interior of the housing (2) is moulded on to one end of the housing (2) facing the membrane (4), with which shoulder (22) the membrane (4) is pressure-tightly connected.

6. A pressure transducer according to Claim 5, in which a hollow space formed by the membrane (4), the shoulder (22) and the sensor member (1) is completely filled with the solid substance (5).

7. A pressure transducer according to Claim 1, in which the solid substance (5) has an elasticity modulus co-ordinated to the stiffness of the membrane (4).

8. A pressure transducer according to Claim 5. in which the solid substance (5) is an elastomer, in particular a silicone cross-linked by addition.

9. A pressure transducer according to Claim 4, in which the membrane (4) is arranged at a distance (X) from the sensor member (1) of such a length that the temperature-determined measuring error is minimal.

10. A pressure transducer according to Claim 1, in which the membrane (4) is connected, in particular bonded, to the housing (2) to form a pressure-tight and gas-tight seal.

## Revendications

1. Capteur de pression comprenant
- un élément de détection (1),
-- comprenant une membrane de détection (11) maintenue au niveau de son bord, dont la partie non maintenue est déformable sous l'effet d'une pression à mesurer,
- un boîtier (2),
- des moyens de fixation (3) pour la fixation du bord de la membrane de détection (11) dans le boîtier (2),
- une membrane (4) raccordée au boîtier (2) à laquelle est amenée une pression à mesurer
et
- un corps solide (5),
-- présentant une épaisseur (x)
-- qui est disposé entre la membrane (4) et la partie déformable de la membrane de détection (11), et
-- qui transmet la pression de la membrane (4) sur la membrane de détection (11), l'épaisseur (x) et le module d'élasticité du corps solide (5) et la rigidité de la membrane (4) étant définis de façon à minimiser les erreurs de mesurage fonction de la température.

2. Capteur de pression selon la revendication 1, sur lequel la surface de la partie déformable de la membrane de détection (11) et la surface de la membrane (4) à laquelle est amenée la pression présentent presque la même dimension.

3. Capteur de pression selon la revendication 1, sur lequel il existe dans le corps solide (5) pour une pression présente au niveau de la membrane (4) une distribution non isotrope de tension.

4. Capteur de pression selon la revendication 1, sur lequel l'élément de détection (1) présente une membrane de détection (11) en céramique et un corps de base (12) en céramique, le bord de la membrane de détection (11) étant maintenu par le corps de base (12).

5. Capteur de pression selon la revendication 1, sur lequel
- le boîtier (2) présente un orifice central axial (21), et
- un épaulement (22) s'étendant radialement à l'intérieur de boîtier (2) est formé au niveau d'une extrémité opposée à la membrane (4), la membrane (4) étant raccordée hermétiquement par pression audit épaulement (22).

6. Capteur de pression selon la revendication 5, sur lequel un corps creux formé par la membrane (4), l'épaulement (22) et l'élément de détection (1) est entièrement rempli par le corps solide (5).

7. Capteur de pression selon la revendication 1, sur lequel le corps solide (5) présente un module d'élasticité qui correspond à la rigidité de la membrane (4).

8. Capteur de pression selon la revendication 5, sur lequel le corps solide (5) est un élastomère, en particulier un silicone de réticulation par addition.

9. Capteur de pression selon la revendication 4, sur lequel la membrane (4) est disposée à une distance (x) de l'élément de détection (1), qui est dimensionné de façon à ce que l'erreur de mesurage du capteur de pression fonction de la température soit réduite au minimum.

10. Capteur de pression selon la revendication 1, sur lequel la membrane (4) est raccordée hermétiquement par pression et hermétiquement par gaz au boîtier (2), en particulier soudée.
